# EUROPÄISCHE PATENTANMELDUNG

(11) **EP 3 978 233 A1**
(43) Veröffentlichungstag der Anmeldung: **06.04.2022**
(21) Anmeldenummer: 21020481.4
(22) Anmeldetag: 24.09.2021
(51) Int. Cl.: B32B 5/02, B32B 7/022, B32B 7/025, B32B 27/10, B32B 27/12, B32B 27/32, B32B 27/34, B32B 27/36, B32B 29/00, D21H 13/00, H01B 1/22

(54) **BEHEIZBARES VERBUNDMATERIAL FÜR DEN EINSATZ BEI DER HERSTELLUNG MODERNISIERUNG, SANIERUNG ODER RENOVIERUNG VON GEBÄUDEN, GEBÄUDETEILEN ODER DERGLEICHEN**

(30) Priorität: 05.10.2020 DE 102020006085
(71) Anmelder: Giesecke+Devrient Currency Technology GmbH, 81677 München (DE)
(72) Erfinder: Renner, Patrick, 83677 Reichersbeuern (DE)
(74) Vertreter: Giesecke + Devrient IP

(57) **Zusammenfassung**

Die Erfindung betrifft ein Verbundmaterial für den Einsatz bei der Herstellung, Modernisierung, Sanierung oder Renovierung von Gebäuden, Gebäudeteilen oder dergleichen, wobei das Verbundmaterial aus einem vorzugsweise flexiblen Material besteht, wobei das Verbundmaterial mindestens teilweise aus einer ersten Schicht und einer zweiten Schicht besteht.

Erfindungsgemäß weist die erste Schicht eine hohe Reiß- und Dehnfestigkeit auf. Die zweite Schicht ist erfindungsgemäß elektrisch leitfähig. Die erste Schicht dient dabei als Funktionsschicht sowie als Trägerschicht, die die elektrisch leitfähige zweite Schicht trägt, wobei die zweite Schicht die Verbundfolie beheizbar und/oder abschirmend für elektromagnetische Strahlung macht.

## Beschreibung

Die Erfindung betrifft ein Verbundmaterial für den Einsatz bei der Herstellung, Modernisierung, Sanierung oder Renovierung von Gebäuden, Gebäudeteilen oder dergleichen, wobei das Verbundmaterial aus einem vorzugsweise flexiblen Material besteht, wobei das Verbundmaterial mindestens teilweise aus einer ersten Schicht und einer zweiten Schicht besteht.

Ein derartiges Verbundmaterial wird insbesondere als Dampfbremse oder Dampfsperre verwendet. Beispielsweise besteht es aus einer Kunststofffolie, beispielsweise aus Polyethylen, mit einer Dicke d = 0,1 mm und einer Wasserdampfdiffusionswiderstandszahl µ = 100.000. Die wasserdampfdiffusionsäquivalente Luftschichtdicke s_{d} berechnet sich somit gemäß s_{d} = µ * d zu s_{d} = 10 m, die Kunststofffolie hat also einer Sperrwirkung wie 10 m Luft. Eine Aluminiumfolie mit einer Dicke d = 0,05 mm weist hingegen einen s_{d}-Wert von 1500 m auf, der also um den Faktor 300 größer ist als der s_{d}-Wert der genannten Kunststofffolie.

Gemäß DIN 4108 wird ein Material mit einer wasserdampfdiffusionsäquivalenten Luftschichtdicke s_{d} von gleich oder weniger als 0,5 m als dampfdurchlässig, von mehr als 0,5 m als diffusionsbremsend und von mehr als 100 m als diffusionssperrend bezeichnet. Bei einer wasserdampfdiffusionsäquivalenten Luftschichtdicke s_{d} von gleich oder mehr als 1500 m wird ein Material als diffusionsdicht bezeichnet.

Sowohl Dampfbremsen als auch Dampfsperren werden in der Regel raumseitig auf beispielsweise eine Glasfasermatte angebracht und müssen luftdicht ausgeführt sein.

Anwendungen finden derartige Dampfbremsen oder Dampfsperren beispielsweise an der Innenseite von gedämmten Dächern (Flachdächer, Satteldächer, Pultdächer, etc.) oder an Außenwänden (z.B. bei Holzkonstruktionshäusern und Fertighäuser, oder auch Massivbauten aus Ziegel und Beton). Des Weiteren können sie an der Innenseite von Kellerwänden, die mit einer Innendämmung versehen sind, oder unter Estrich (zwischen Estrich und Betondecke, ggf. zwischen Fußbodenheizung und Boden-/Zwischendeckendämmung) angebracht sein.

Aus DE 10 2018 008 584 A1 ist eine Verbundfolie bekannt, die für den Einsatz in der Bauwirtschaft und/oder als Baufolie vorgesehen ist, die aus einer Funktionsschicht und einer inneren und äußeren Schutzschicht besteht. Diese Verbundfolie weist eine wasserdampfdiffusionsäquivalenten Luftschichtdicke s_{d} von gleich oder weniger als 0,5 m auf und ist damit dampfdurchlässig.

Der Erfindung liegt deshalb die Aufgabe zugrunde, eine gattungsgemäße Verbundfolie derart weiterzubilden, dass sie auch für weitere Anwendungsfälle verwendet werden kann.

Diese Aufgabe wird durch die Merkmale der unabhängigen Ansprüche gelöst. Weiterbildungen der Erfindung sind Gegenstand der abhängigen Ansprüche.

Erfindungsgemäß weist die erste Schicht eine hohe Reiß- und Dehnfestigkeit auf. Hohe Weiterreißwiderstände werden (polymerabhängig) beispielsweise durch Kombination aus einem Polyamid/Polypropylenvlies (PA/PP), Polypropylen/Polypropylenvlies (PP) oder Polyethylen low density (PE-LD) erzielt.

Besteht die erste Schicht oder Dampfbremse im Wesentlichen aus der Kombination Polyamid/Polypropylenvlies (PA/PP), kann sie durch folgende Werte charakterisiert werden:
- Weiterreißwiderstand - längs EN 12310-1: ≥ 50 N
- Weiterreißwiderstand - quer EN 12310-1: ≥ 50 N
- Maximale Zugkraft - längs EN 12311-2: ≥ 130 N/50mm
- Maximale Zugkraft - quer EN 12311-2: ≥ 115 N/50mm
- Dehnung - längs EN 12311-2: ≥ 50 %
- Dehnung - quer EN 12311-2: ≥ 50 %

Besteht die erste Schicht oder Dampfbremse hingegen im Wesentlichen aus der Kombination Polypropylen/Polypropylenvlies (PP), kann sie durch folgende Werte charakterisiert werden:
- Wasserdampfdurchlässigkeit: 2 m
- Maximale Zugkraft - längs EN 12311-2: ≥ 140 N/50mm
- Maximale Zugkraft - quer EN 12311-2: ≥ 130 N/50mm
- Maximale Reißdehnung - längs EN 12311-2: ≥ 50 %
- Maximale Reißdehnung - quer EN 12311-2: ≥ 50 %

Besteht die erste Schicht oder Dampfbremse hingegen im Wesentlichen aus der Kombination Polyethylen low density (PE-LD), kann sie durch folgende Werte charakterisiert werden:
- Wasserdampfdurchlässigkeit: > 100 m
- Weiterreißwiderstand - längs EN 12310-1: > 107 N
- Weiterreißwiderstand - quer EN 12310-1: > 101 N
- Maximale Zugkraft - längs EN 12311-2: ≥ 130 N/50mm
- Maximale Zugkraft - quer EN 12311-2: ≥ 140 N/50mm
- Dehnung - längs EN 12311-2: ≥ 600 %
- Dehnung - quer EN 12311-2: ≥ 700 %

Die zweite Schicht ist erfindungsgemäß elektrisch leitfähig. Die erste Schicht dient dabei als Funktionsschicht sowie als Trägerschicht, die die elektrisch leitfähige zweite Schicht trägt, wobei die zweite Schicht die Verbundfolie beheizbar und/oder abschirmend für elektromagnetische Strahlung macht.

Besonders bevorzugt weist das Verbundmaterial eine wasserdampfdiffusionsäquivalente Luftschichtdicke s_{d} von größer 0,1 m, bevorzugt größer 0,5 m und besonders bevorzugt größer 100 m auf.

Gemäß einer weiteren vorteilhaften Ausführungsform ist zumindest eine dritte Schicht auf die zweite Schicht aufgebracht, wobei die zumindest dritte Schicht die Beständigkeit der zweiten Schicht insbesondere gegenüber Feuchtigkeitsabsorption, Reißfestigkeit und Oxidationsresistenz erhöht.

Gemäß einer weiteren vorteilhaften Ausführungsform ist zumindest eine vierte Schicht auf die dritte Schicht aufgebracht, wobei die zumindest vierte Schicht die Beständigkeit der dritten Schicht gegenüber Feuchtigkeitsabsorption, Reißfestigkeit oder Oxidationsresistenz erhöht, soweit es sich bei der dritten Schicht um einen Faserverbund handelt.

Die dritte oder vierte Schicht kann bevorzugt metallisiert oder mit einer Metallfolie kaschiert sein. Dies führt vorteilhaft dazu, dass das Verbundmaterial reflektierend für Wärmestrahlung ausgebildet ist.

Gemäß einer weiteren vorteilhaften Ausführungsform ist die zweite Schicht ein elektrisch leitfähiger und/oder strahlungsabschirmender Faserverbund, beispielsweise Papier oder Vlies, die besonders bevorzugt mit leitfähigen Fäden ausgestattet ist. Ein derartiges elektrisch leitendes Papier ist beispielsweise aus EP 2 770 104 B1 bekannt. Bevorzugt besteht die zweite Schicht dabei aus Baumwoll-, Zellstoff-, Polyolefin-, PET-, Polyamidfasern oder mineralischen Fasern oder einer Mischung aus diesen Fasern und enthält Nassfestmittel und/oder Imprägniermittel oder ist geleimt.

Gemäß einer weiteren vorteilhaften Ausführungsform ist die erste Schicht eine Folie, die beispielsweise aus Polypropylen, Polyethylen, Polyamid oder Polyethylenterephthalat besteht.

Gemäß einer weiteren vorteilhaften Ausführungsform wird die wasserdampfdiffusionsäquivalente Luftschichtdicke s_{d} von größer 0,1 m über mineralische Schichten, beispielsweise Calciumsulfat oder Calciumsilikat, und/oder zellstoffbasierte Schichten erreicht.

Gemäß einer weiteren vorteilhaften Ausführungsform ist zumindest eine der Schichten ein trittschalldämmendes Material, insbesondere Polystyrol, PE-Schaum, Kork oder Faserverbundmaterial, mit einer Dicke von 1 mm bis 5mm.

Gemäß einer weiteren vorteilhaften Ausführungsform ist zumindest einer der Schichten ein wärmedämmendes Material, insbesondere Polystyrol, Polyurethan oder Faserverbundmaterial, mit einer Dicke von 1 mm bis 400 mm, vorzugsweise 1 mm bis 200 mm, besonders bevorzugt 1 mm bis 80 mm. Für die Gebäudeaußendämmung bei Betonbauten werden üblicherweise Dicken von Dämmstoffen von bis zu 400 mm verwendet.

Gemäß einer weiteren vorteilhaften Ausführungsform sind die verschiedenen Schichten mittels Kaschierung, (Thermo-)Laminierung, Verschweißen (Laser, Ultraschall) oder Extrusion zusammengefügt.

Gemäß einer weiteren vorteilhaften Ausführungsform ist zumindest eine der Schichten über einen Druckprozess aufgebracht, insbesondere Tiefdruck, Siebdruck, Flexodruck, Düsenauftrag oder Walzenauftrag.

Die Erfindung betrifft weiterhin eine Verwendung eines Verbundmaterials nach einem der vorigen Ansprüche als
- Dampfbrems- oder Dampfsperrbahn mit integrierter Niedrigenergie-Dach- oder Wandflächenheizung und/oder
- als Trittschalldämmung mit integrierter Niedrigenergie-Fußbodenflächenheizung und/oder
- als Wärmedämmung mit integrierter Niedrigenergie-Fußbodenflächenheizung und/oder
- als Wärmedämmung mit integrierter Niedrigenergie-Wandflächenheizung und/oder
- als Feuchtigkeitssperre unter einem Estrich mit integrierter Niedrigenergie-Fußbodenflächenheizung.

Besonders vorteilhaft (weil kostengünstig und effizient) verwendet die Erfindung die im Bau ohnehin üblicherweise großflächig verarbeiteten Dampfbremsbahnen intelligent, indem die Dampfbremsbahnen zusätzlich beheizbar und/oder strahlungsabschirmend ausgestattet sind. Dies kann besonders bevorzugt durch einen Verbund mit leitfähigem Papier umgesetzt werden. Auf diese Weise führt eine erfindungsgemäße Verbundfolie bei Anwendung an Außenwänden/Dachschrägen/Fensterlaibungen Wärmebrücken über Taupunktverschiebung nicht mehr zu Feuchtigkeitsanreicherung und damit Schimmelbildung. Des Weiteren kann die erfindungsgemäße Verbundfolie als niedrigenergetische und damit auch unter ökologischen Gesichtspunkten effiziente Flächenheizung dienen.

So ist weiterhin die Beheizbarkeit über eine Trittschalldämmungen oder Fußbodendämmung (Dämmung der Geschossdecke) statt (oder als Ergänzung zu) einer herkömmlichen Fußbodenheizung möglich. Insbesondere in modernen Niedrigenergiehäusern mit ggf. Wärmepumpen sind die Vorlauftemperaturen einer Heizung deutlich unter 30° C. Aufgrund der resultierenden Trägheit werden diese Heizungen i.d.R. nicht abgeschaltet, sondern z.B. über Außentemperaturfühler gesteuert.

Leitfähiges Verbundmaterial kann daher für die beschriebenen Anwendungen kosten- und emissionseffizient herkömmliche Fußboden-/Wandflächenheizungen ersetzen oder ergänzen.

Besonders vorteilhaft führt die Erfindung somit zu einer Verbesserung von
- Raumklima, da Strahlungswärme,
- Wohlbefinden, da warme Außenwände und keine "heißen" Füße,
- Gesundheit, da kein versteckter Schimmel möglich durch Taupunktsverschiebung in den (Fenster-)Nischen oder an Außenwänden,
- Umwelt, da geringer Unterschied zwischen Fußboden- und Raumtemperatur, keine örtliche Emission (Feinstaub, etc.),
- optional gebäudeumfassende Abschirmung vor (Funk-)Strahlung.

Die Erfindung führt besonders vorteilhaft zu einer kostengünstigen gebäudeumfassenden Niedrigenergie-Flächenheizung in Dachschrägen, an Außenwänden oder als Fußbodenheizung sowie zu einem kostengünstigen gebäudeumfassenden Schutz vor Schimmelbildung und Strahlung.

Bei Ziegelwänden (mit hoher Rohdichte oder Vollziegeln) sowie insbesondere bei Betonwänden wird eine Dämmung üblicherweise an der Außenseite der Wände angebracht. Hier kann zwischen dem sehr wärmeleitfähigen Beton und der üblicherweise daher sehr dicken Außendämmung der erfindungsgemäße Folienverbund eingebracht werden. Vorteilhaft ist der Verbund auch bereits auf die Dämmung aufkaschiert, was die Verarbeitung erleichtert. Die innenliegende Ziegel- oder Betonwand wird dadurch warm gehalten.

Es versteht sich, dass die vorstehend genannten und die nachfolgend noch zu erläuternden Merkmale nicht nur in den angegebenen Kombinationen, sondern auch in anderen Kombinationen einsetzbar sind, ohne den Rahmen der vorliegenden Erfindung zu verlassen, soweit dies von dem Schutzumfang der Ansprüche erfasst ist.

Anhand der nachfolgenden Ausführungsbeispiele und der ergänzenden Figuren werden die Vorteile der Erfindung erläutert. Die Ausführungsbeispiele stellen bevorzugte Ausführungsformen dar, auf die jedoch die Erfindung in keinerlei Weise beschränkt sein soll. Des Weiteren sind die Darstellungen in den Figuren des besseren Verständnisses wegen stark schematisiert und spiegeln nicht die realen Gegebenheiten wider. Insbesondere entsprechen die in den Figuren gezeigten Proportionen nicht den in der Realität vorliegenden Verhältnissen und dienen ausschließlich zur Verbesserung der Anschaulichkeit. Des Weiteren sind die in den folgenden Ausführungsbeispielen beschriebenen Ausführungsformen der besseren Verständlichkeit wegen auf die wesentlichen Kerninformationen reduziert.

Im Einzelnen zeigen schematisch:
- Fig. 1: ein erfindungsgemäßes Verbundmaterial als Dampfbremse oder Dampfsperre gemäß einem ersten Ausführungsbeispiel,
- Fig. 2: ein erfindungsgemäßes Verbundmaterial als Dampfbremse oder Dampfsperre gemäß einem zweiten Ausführungsbeispiel,
- Fig. 3: ein erfindungsgemäßes Verbundmaterial zur Anwendung als Trittschalldämmung,
- Fig. 4: ein erfindungsgemäßes Verbundmaterial zur Anwendung als Geschossdeckendämmung,

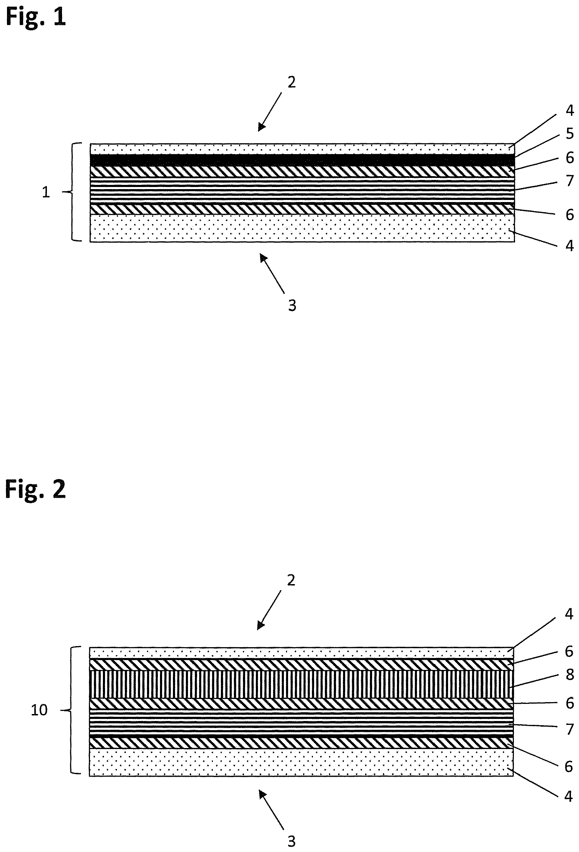

Fig. 1 zeigt ein erfindungsgemäßes Verbundmaterial 1 mit einer Außenseite 2 und einer Innenseite 3 als Dampfbremse oder Dampfsperre gemäß einem ersten Ausführungsbeispiel. Das Verbundmaterial 1 besteht hierbei aus einer Folie 4, einer optionalen Metallisierung oder Metallfolie 5 zur Wärme- und Strahlungsreflexion, einer optionalen Klebstoffschicht 6, die gegebenenfalls eine zusätzliche Funktion als Barriereschicht aufweist, einer Schicht aus einem elektrisch leitfähigen Faserverbund 7, die als Heizung dient, einer Klebstoffschicht 6 und einer Folie 4.

In einer weiteren Ausführungsform von Fig.1 kann vorzugsweise die zur Außenseite 2 liegende Folie 4 durch unflexibles dampfbremsendes Material auf Basis von Mineralien wie Calciumsulfat und Calciumsilikat oder auf Basis von Holz in Materialstärken von vorzugsweise bis zu 30 mm ersetzt werden. Die zur Innenseite 3 liegende optionale Folie 4 übernimmt dann die Schutzfunktion für den Faserverbund 7.

Fig. 2 zeigt ein erfindungsgemäßes Verbundmaterial 10 mit einer Außenseite 2 und einer Innenseite 3 als Dampfbremse oder Dampfsperre gemäß einem zweiten Ausführungsbeispiel. Das Verbundmaterial 10 besteht hierbei aus einer Folie 4, einer Klebstoffschicht 6, einer Schicht 8 aus einem Faserverbund, die elektromagnetische Strahlung absorbiert, einer Klebstoffschicht 6, die gegebenenfalls eine zusätzliche Funktion als Barriereschicht aufweist, einer Schicht 7 aus einem elektrisch leitfähigen Faserverbund, die als Heizung dient, einer Klebstoffschicht 6 und einer Folie 4.

Auf die optionale Schicht 8 inkl. einer Klebstoffschicht 6 kann verzichtet werden, soweit die Abschirmung elektromagnetische Strahlung sekundär ist oder Schicht 7 auch diese Funktion übernimmt.

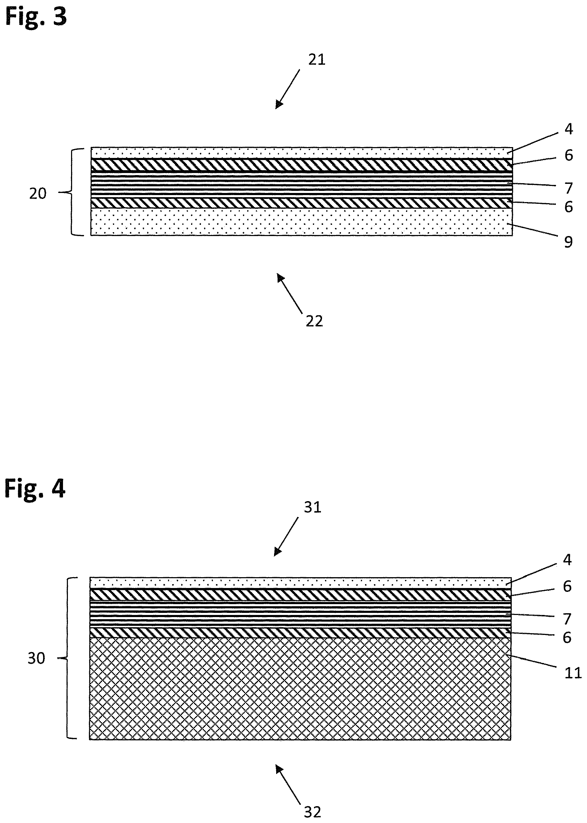

Fig. 3 zeigt ein erfindungsgemäßes Verbundmaterial 20 mit einer Oberseite 21, die Fußbodenbelag wie beispielsweise Parkett oder Laminat trägt, und einer Unterseite 22, die auf Rohboden oder Estrich aufliegt, zur Anwendung als Trittschalldämmung. Das Verbundmaterial 20 besteht hierbei aus einer vorzugsweise dampfbremsenden Schutzfolie 4, einer Klebstoffschicht 6, einer Schicht 7 aus einem elektrisch leitfähigen Faserverbund, die als Heizung dient, einer Klebstoffschicht 6, und einer Trittschall-dämmenden Schicht 9 aus Polystyrol, PE-Schaum, Kork, etc.. Schicht 9 weist beispielsweise eine Dicke von bis zu 5 mm auf und ist bei zusätzlicher, unterhalb des Verbundmaterials 20 angeordneter Fußbodenheizung möglichst dünn auszuführen.

Zwischen der Schicht 7 und der Trittschall-dämmenden Schicht 9 kann zusätzlich eine Metallfolie oder eine metallisierte Folie einkaschiert sein.

Fig. 4 zeigt ein erfindungsgemäßes Verbundmaterial 30 mit einer Oberseite 31, die Estrich trägt, und einer Unterseite 32, die auf Rohboden aufliegt, zur Anwendung als Geschossdeckendämmung. Das Verbundmaterial 30 besteht hierbei aus einer Schutzfolie 4, einer Klebstoffschicht 6, einer Schicht 7 aus einem elektrisch leitfähigen Faserverbund, die als Heizung dient, einer Klebstoffschicht 6, und einer Körperschall- und wärmedämmenden Schicht 11 aus Polystyrol, Polyurethan oder einer Faserplatte. Schicht 11 weist beispielsweise eine Dicke von 5 cm auf.

Bei Dicken der Schicht 11 bis zu 400 mm (in Abh. vom Wärmedurchgangskoeffizienten), vorzugsweise bis zu 220 mm, ist der Verbund 30 auch zur Fassadendämmung geeignet. Die Oberseite 31 zeigt hierbei zur Massivwand, die Unterseite 32 zur Fassadenverkleidung.

## Patentansprüche

1. Verbundmaterial für den Einsatz bei der Herstellung, Modernisierung Sanierung oder Renovierung von Gebäuden, Gebäudeteilen oder dergleichen, wobei das Verbundmaterial aus einem vorzugsweise flexiblen Material besteht, wobei das Verbundmaterial mindestens teilweise aus einer ersten Schicht und einer zweiten Schicht besteht, **dadurch gekennzeichnet, dass** die erste Schicht eine hohe Reiß- und Dehnfestigkeit aufweist und die zweite Schicht elektrisch leitfähig ist.

2. Verbundmaterial nach Anspruch 1, **dadurch gekennzeichnet, dass** das Verbundmaterial eine wasserdampfdiffusionsäquivalente Luftschichtdicke s_{d} von größer 0,1 m, bevorzugt größer 0,5 m und besonders bevorzugt größer 100 m aufweist.

3. Verbundmaterial nach Anspruch 1 oder 2, **dadurch gekennzeichnet, dass** zumindest eine dritte Schicht auf die zweite Schicht aufgebracht ist, wobei die zumindest dritte Schicht die Beständigkeit der zweiten Schicht insbesondere gegenüber Feuchtigkeitsabsorption, Reißfestigkeit und Oxidationsresistenz erhöht.

4. Verbundmaterial nach Anspruch 3, **dadurch gekennzeichnet, dass** zumindest eine vierte Schicht auf die dritte Schicht aufgebracht ist, wobei die zumindest vierte Schicht die Beständigkeit der dritten Schicht insbesondere gegenüber Feuchtigkeitsabsorption, Reißfestigkeit oder Oxidationsresistenz erhöht, soweit es sich bei der dritten Schicht um einen Faserverbund handelt.

5. Verbundmaterial nach Anspruch 3 oder 4, **dadurch gekennzeichnet, dass** zumindest die dritte oder vierte Schicht metallisiert oder mit einer Metallfolie kaschiert ist.

6. Verbundmaterial nach einem der vorigen Ansprüche, **dadurch gekennzeichnet, dass** die zweite Schicht ein elektrisch leitfähiger und/oder strahlungsabschirmender Faserverbund ist, beispielsweise Papier oder Vlies.

7. Verbundmaterial nach Anspruch 6, **dadurch gekennzeichnet, dass** die zweite Schicht mit leitfähigen Fäden ausgestattet ist.

8. Verbundmaterial nach Anspruch 6 oder 7, **dadurch gekennzeichnet, dass** die zweite Schicht aus Baumwoll-, Zellstoff-, Polyolefin-, PET-, Polyamidfasern oder mineralischen Fasern oder einer Mischung aus diesen Fasern besteht.

9. Verbundmaterial nach einem der Ansprüche 6 bis 8, **dadurch gekennzeichnet, dass** die zweite Schicht Nassfestmittel und/oder Imprägniermittel enthält oder geleimt ist.

10. Verbundmaterial nach einem der vorigen Ansprüche, **dadurch gekennzeichnet, dass** die erste Schicht im Wesentlichen eine Folie ist und beispielsweise aus Polypropylen, Polyethylen, Polyamid oder Polyethylenterephtalat besteht.

11. Verbundmaterial nach einem der vorigen Ansprüche, **dadurch gekennzeichnet, dass** die wasserdampfdiffusionsäquivalente Luftschichtdicke s_{d} von größer 0,1 m über mineralische Schichten, beispielsweise Calciumsulfat oder Calciumsilikat, und/oder zellstoffbasierte Schichten erreicht wird.

12. Verbundmaterial nach einem der vorigen Ansprüche, **dadurch gekennzeichnet, dass** zumindest eine der Schichten ein trittschalldämmendes Material ist, insbesondere Polystyrol, PE-Schaum, Kork oder Faserverbundmaterial, mit einer Dicke von 1 mm bis 5 mm.

13. Verbundmaterial nach einem der vorigen Ansprüche, **dadurch gekennzeichnet, dass** zumindest einer der Schichten ein wärmedämmendes Material ist, insbesondere Polystyrol, Polyurethan oder Faserverbundmaterial, mit einer Dicke von 1 mm bis 400 mm, vorzugsweise 1 mm bis 200 mm, besonders bevorzugt 1 mm bis 80 mm.

14. Verbundmaterial nach einem der vorigen Ansprüche, **dadurch gekennzeichnet, dass** die verschiedenen Schichten mittels Kaschierung, (Thermo-)Laminierung, Verschweißen (Laser, Ultraschall) oder Extrusion zusammengefügt sind.

15. Verbundmaterial nach einem der vorigen Ansprüche, **dadurch gekennzeichnet, dass** zumindest eine der Schichten über einen Druckprozess aufgebracht ist, insbesondere Tiefdruck, Siebdruck, Flexodruck, Düsenauftrag oder Walzenauftrag.

16. Verwendung eines Verbundmaterials nach einem der vorigen Ansprüche als
• Dampfbrems- oder Dampfsperrbahn mit integrierter Niedrigenergie-Dach- oder Wandflächenheizung und/oder
• als Trittschalldämmung mit integrierter Niedrigenergie-Fußbodenflächenheizung und/oder
• als Wärmedämmung mit integrierter Niedrigenergie-Fußbodenflächenheizung und/oder
• als Wärmedämmung mit integrierter Niedrigenergie-Wandflächenheizung und/oder
• als Feuchtigkeitssperre unter einem Estrich mit integrierter Niedrigenergie-Fußbodenflächenheizung.
